(19) Europäisches Patentamt
European Patent Office
Office européen des brevets

(11) **EP 0 948 193 B1**

(12) **EUROPÄISCHE PATENTSCHRIFT**

(45) Veröffentlichungstag und Bekanntmachung des Hinweises auf die Patenterteilung:
**25.02.2004 Patentblatt 2004/09**

(51) Int Cl.$^7$: **H04N 1/44**, H04N 1/32, G09C 5/00, G06T 1/00

(21) Anmeldenummer: **99104339.9**

(22) Anmeldetag: **04.03.1999**

(54) **Verfahren zum Einbringen manipulationssicherer digitaler Fingerabdrücke in elektronische Dokumente**

Method for insertion of digital manipulation-proof fingerprints in electronic documents

Procédé pour l'insertion d'empreintes digitales numériques avec sécurité de manipulation dans des documents électroniques

(84) Benannte Vertragsstaaten:
**AT BE CH CY DE DK ES FI FR GB GR IE IT LI LU MC NL PT SE**

(30) Priorität: **03.04.1998 DE 19816356**

(43) Veröffentlichungstag der Anmeldung:
**06.10.1999 Patentblatt 1999/40**

(73) Patentinhaber:
- **Deutsche Telekom AG**
  **53113 Bonn (DE)**
- **DaimlerChrysler Services (debis)AG**
  **10875 Berlin (DE)**

(72) Erfinder:
- **Schwenk, Jörg**
  **91239 Henfenfeld (DE)**
- **Ueberberg, Johannes, Dr.**
  **53757 St. Augustin (DE)**

(56) Entgegenhaltungen:
EP-A- 0 660 275     US-A- 5 467 447
US-A- 5 664 018     US-A- 5 699 427

- DITTMANN J ET AL: "Combining digital watermarks and collusion secure fingerprints for digital images" SECURITY AND WATERMARKING OF MULTIMEDIA CONTENTS, SAN JOSE, CA, USA, 25-27 JAN. 1999, Bd. 3657, Seiten 171-182, XP000961848 Proceedings of the SPIE - The International Society for Optical Engineering, 1999, SPIE-Int. Soc. Opt. Eng, USA ISSN: 0277-786X
- BONEH D ET AL: "COLLUSION-SECURE FINGERPRINTING FOR DIGITAL DATA" ADVANCES IN CRYPTOLOGY - CRYPTO '95. SANTA BARBARA, AUG. 27 - 31, 1995, PROCEEDINGS OF THE ANNUAL INTERNATIONAL CRYPTOLOGY CONFERENCE (CRYPTO), BERLIN, SPRINGER, DE, Bd. CONF. 15, 27. August 1995 (1995-08-27), Seiten 452-465, XP000533644 ISBN: 3-540-60221-6
- BLAKEY G R., MEADOWS C., PURDY G. B.: "Fingerprinting Long Forgiving Messages" ADVANCES IN CRYPTOLOGY - CRYPTO '85 PROCEEDINGS, Seiten 180-189, XP002192967 1986, Berlin, West Germany, Springer-Verlag, West Germany

**Beschreibung**

Durch das schnelle Wachstum des Internets und die dadurch entstandene Möglichkeit, Dokumente digital zu verbreiten, entsteht ein steigender Bedarf zum Schutz vor illegaler Verbreitung von Dokumenten und damit zum Schutz eines Copyright-Inhabers vor Raubkopien.

Zu diesem Zweck arbeiten große Firmen, wie IBM, NEC und Mikrosoft, aber auch kleinere Firmen, wie Digimarc /siehe Funkschau 17/97; S. 21) und Forschungsinstitute, wie die Fraunhofergesellschaft IGD und die GMD Darmstadt daran, sogenannte digitale Wasserzeichen in Dokumente einzubetten. Bei Verfahren auf dieser Grundlage wird eine Information, die den Copyright-Inhaber identifiziert, unsichtbar in die zu schützenden Dokumente eingebracht. Die Art des eingebrachten digitalen Wasserzeichens hängt dabei vom jeweiligen Typ des Dokuments ab (z. B. Postscript, JPEG, MPEG-1).

Digitale Wasserzeichen erlauben es dem Copyright-Inhaber, sein geistiges Eigentum an einem illegal verteilten Dokument nachzuweisen.

Digitale Wasserzeichen erlauben es jedoch nicht, den Verursacher der illegalen Verteilung zu ermitteln und ihm die illegale Verteilung nachzuweisen.

Digitale Fingerabdrücke gehen einen Schritt weiter. Bei Verwendung des Prinzips der Sicherung eines Dokuments über digitale Fingerabdrücke wird neben dem digitalen Wasserzeichen des Copyright-Inhabers gleichzeitig auch der Name des Kunden, der eine elektronische Kopie des Dokuments erwirbt, unsichtbar in das Dokument eingefügt. Verteilt dieser Kunde seine Kopie nun entgegen den Interessen des Copyright-Inhabers weiter, so kann dieser anhand seines in allen illegalen Kopien enthaltenen elektronischen Fingerabdrucks eindeutig identifiziert und zur Verantwortung gezogen werden. (Dan Boneh und James Shaw, Collusion-Secure Fingerprinting for Digital Data. Proc. CRYPTO "95" LNCS 963, Springer-Verlag, Berlin 1995, 452-465.)

Im Buch "Einführung in die endliche Geometrie / von Albrecht Beutelspacher. Bibliographisches Institut Mannheim; 1. Blockpläne. -1982-, wird die endliche Geometrie als "relativ neues Teilgebiet der Mathematik" definiert und damit eingegrenzt. Endliche geometrische Strukturen sind dadurch gekennzeichnet, dass sie sich ohne Rundungsfehler im Computer darstellen lassen (Endlichkeit), und dass die Schnittmengen zweier Unterstrukturen einer solchen geometrischen Struktur eine bekannte Größe und Form haben. Bei den bekannten Angriffsszenarien auf Fingerprint-Verfahren werden letztendlich immer solche Schnittmengen gebildet. Um die Effekte solcher Angriffe abschätzen zu können, ist es wichtig, die Größe und Struktur dieser Schnittmengen bestimmen zu können.

Das Prinzip der Sicherung von Dokumenten mittels digitaler Fingerabdrücke hat bislang eine gravierende Schwachstelle, die daraus resultiert, daß sich die den einzelnen Kunden zugeordneten Dokumente in ihrem Bitmuster genau an der Stelle unterscheiden, an der der individuelle nutzerbezogene Fingerabdruck der unterschiedlichen Kunden angeordnet ist. Setzt sich ein Kunde in den Besitz des Dokuments eines zweiten Kunden, so ist er in der Lage, durch bitweisen Vergleich der beiden Dokumente die Stellen mit den unterschiedlichen digitalen Fingerabdrücken aufzuspüren und sie aus dem Dokument zu beseitigen (löschen). Ziel einer derartigen Manipulation ist immer eine Kopie des Dokuments zu erhalten, aus dem alle nutzerbezogenen Fingerabdrücke entfernt sind.

Die Erfindung hat zur Aufgabe, diesen Mangel zu beseitigen. Dabei soll nach wie vor jedes Dokument nur einem Kunden zugeordnet sein. Die Kunden dürfen weder einzeln noch als Gruppe in der Lage sein, die kundenbezogenen Fingerabdrücke in ihrer Gesamtheit zu löschen. Desweiteren soll es möglich sein, aus den noch erhalten gebliebenen Fragmenten der digitalen Fingerabdrücke eines unrechtmäßig verteilten Dokuments zweifelsfrei zu rekonstruieren, welche Kunden an der Manipulation beteiligt sind, bzw. welche Dokumente in die Manipulation einbezogen wurden.

Kunden, die in derartige Manipulationen einbezogen sind, werden nachfolgend als Angreifer bezeichnet.

Ausgangspunkt der Erfindung ist der Sachverhalt, daß beim Vergleich von Dokumenten verschiedener Kunden ein Angreifer zwar die Stellen entdecken kann, an denen sich die Fingerabdrücke unterscheiden, er kann jedoch die Stellen nicht erkennen, an denen Fingerabdrücke auf beiden Dokumenten gleich sind.

Erfindungsgemäß wird ausgehend von einer vorher festgelegten Anzahl von Kopien zum Dokument für jede Kopie eine Stelle oder ein Bereich für den digitalen Fingerabdruck des Kunden definiert. Alle im Rahmen des Dokuments definierten Stellen und Bereiche für die digitalen Fingerabdrücke unterliegen in ihrer Gesamtheit einem in sich geschlossenen endlichen Ordnungssystem, in dem an genau definierten Stellen oder Bereichen Überschneidungen der digitalen Fingerabdrücke definiert sind. Bei einer nach diesem Prinzip vorgenommenen Platzzuweisung für digitale Fingerabdrücke können alle Stellen oder Bereiche S, in denen sich digitale Fingerabdrücke überschneiden, von den Kunden nicht erkannt werden, deren digitale Fingerabdrücke sich an der Stelle oder im Bereich S überschneiden. Übersteigt die Anzahl der Angreifer die im Rahmen des Systems zulässige Anzahl von Angreifern nicht, so können anhand eines Vergleichs des Dokuments mit der manipulierten Kopie, der auf der Auswertung der durch die Angreifer nicht gefundenen Schnittstellen basiert, die an der Manipulation beteiligten Angreifer eindeutig ermittelt werden.

Erfindungsgemäß erfolgt die Plazierung der Fingerabdrücke auf der Basis endlicher geometrischer Strukturen, wobei jedem einzelnen Punkt eines Fingerabdrucks im Rahmen der gewählten endlichen geometrischen Struktur ein eindeutiger Platz zugeordnet ist. Innerhalb der endlichen geometrischen Struktur werden aus der geometrische Struktur ableitbare klar definierte Bereiche, wie beispielsweise Schnittpunkte bestimmt, in denen sich entsprechend der Zuordnung der einzelnen digitalen Fingerabdrücke innerhalb der geometrischen Struktur digitale Fingerabdrücke überschneiden. Diese als Schnittstelle S bezeichneten Bereiche sind für die Kunden nicht erkennbar, deren digitale Fingerabdrücke sich an dieser Stelle bzw. in diesem Bereich S überschneiden. Im Fall einer Manipulation ist daher davon auszugehen, daß es den Angreifern in der Regel nicht gelingt, alle Schnittstellen bzw. Schnittstellenbereiche zu löschen.

Ausgehend von den in endlichen geometrischen Strukturen bestehenden geometrischen Gesetzmäßigkeiten können die an Manipulationen als Angreifer beteiligten Kunden anhand der von ihnen nicht erkannten Schnittstellen bzw. Schnittstellenbereiche identifiziert werden.

Als endliche geometrische Strukturen im erfindungsgemäßen Sinne können beispielsweise

- duale rationale Normkurven in endlichen projektiven Ebenen bzw.
- duale rationale Normkurven in endlichen projektiven Räumen Anwendung finden.

Die Verwendung von dualen rationalen Normkurven in projektiven Räumen bietet sich insbesondere dann an, wenn Kopien des Dokuments an eine größere Anzahl von Kunden verteilt werden müssen.

Das erfindungsgemäße Verfahren wird anhand von zwei Ausführungsbeispielen näher erläutert.

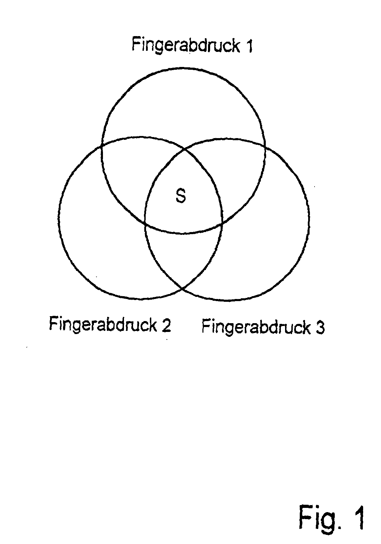

Fig. 1 zeigt das Wirkprinzip des erfindungsgemäßen Verfahrens am Beispiel von drei Fingerabdrücken. Die drei Fingerabdrücke 1, 2 und 3 sind innerhalb einer projektiven Ebene nach geometrischen Gesichtspunkten auf dem zu schützenden Dokument so angeordnet, daß sie sich im Bereich S überschneiden. Jeder der Fingerabdrücke 1, 2 und 3 wird jeweils in einer Kopie des Dokuments angeordnet.

Als Angreifer auftretende Käufer können zwar die Stellen erkennen, an denen sich die Fingerabdrücke unterscheiden, nicht aber die Stellen, an denen sie gleich sind. Schließen sich beispielsweise die Käufer der Kopie 1 und der Kopie 2 zusammen, so können sie nur unterschiedliche Teile von Fingerabdruck 1 und Fingerabdruck 2 erkennen und entfernen. Da die Schnittmenge aus dem sich überschneidenden Bereich S sowohl auf der Kopie von Käufer 1, als auch auf der Kopie von Käufer 2 gleich ist, kann dieser Bereich nicht erkannt werden und bleibt demzufolge auch auf der manipulierten Kopie enthalten. Anhand des bitweisen Vergleichs des Ursprungsdokuments mit der manipulierte Kopie können die Stellen, an denen auf der Kopie Manipulationen vorgenommen wurden, wieder rekonstruiert werden. Die Identifizierung der Angreifer erfolgt anhand des Vergleichs der rekonstruierten Fingerabdrücke mit den Fingerabdrücken des Ursprungsdokuments.

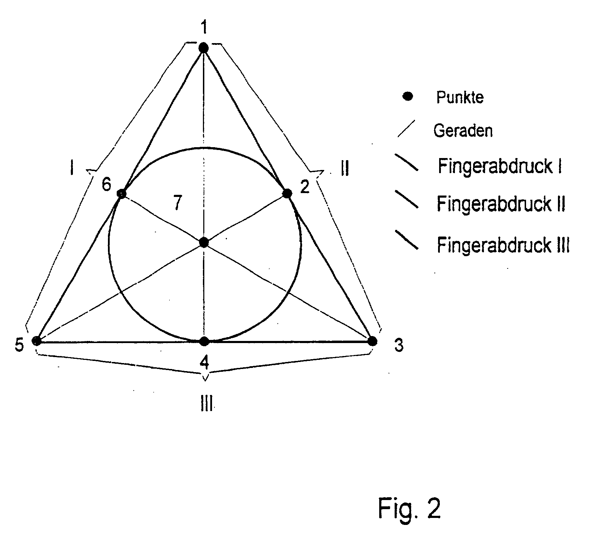

In Fig. 2 ist die Anordnung von drei verschiedenen digitalen Fingerabdrücken als Abbildung in einer projektiven Ebene PG(2,2) dargestellt.

Alle Punkte und Geraden in der projektiven Ebene PG(2,2) sind eingezeichnet. Jedem Punkt in der projektiven Ebene wird mittels einer geheimen Funktion (Einwegfunktion) eine Stelle im Dokument zugewiesen. Jeder Kunde enthält dann eine Kopie des Dokuments, in dem ausschließlich die für seinen digitalen Fingerabdruck zutreffenden Stellen markiert sind. Das kann beispielsweise durch Invertieren der Bits an den betreffende Stellen, die zu seinem Fingerabdruck gehören, erfolgen. Für den Kunden I wären dies z. B. die Stellen, die den Punkten 1, 5 und 6 zugeordnet sind.

Vergleichen nun zwei Kunden anhand ihrer Dokumente ihre Fingerabdrücke bitweise, so finden sie alle markierten Stellen bis auf die Stelle, die im Schnittpunkt der beiden Fingerabdrücke liegt. Würden beispielsweise Kunde I und Kunde II die Fingerabdrücke auf ihren Dokumenten vergleichen, so könnten sie die Stellen finden, die den Punkten 2, 3, 5 und 6 entsprechen. Die Stelle entsprechend Punkt 1 können sie dagegen nicht finden, da die Bitwerte der Stelle entsprechend Punkt 1 in beiden Kopien gleich sind.

In der im ersten Ausführungsbeispiel gewählten Ausführungsform ist eine Identifizierung aber auch dann noch möglich, wenn sich maximal je zwei Kunden als Angreifer verbünden, denn jeder Schnittpunkt kann nur von genau einem Paar von Angreifern übersehen werden. Im Ausführungsbeispiel nach Figur 1 kann der Punkt 1 nur genau von den Angreifern I und II übersehen werden. Verbünden sich Kunde II und Kunde III zu Angreifern, würden sie genau den Punkt 3 nicht feststellen können. In diesem System mit 3 Kunden müßten sich schon alle 3 Kunden zu Angreifern verbünden, um alle Punkte zu finden.

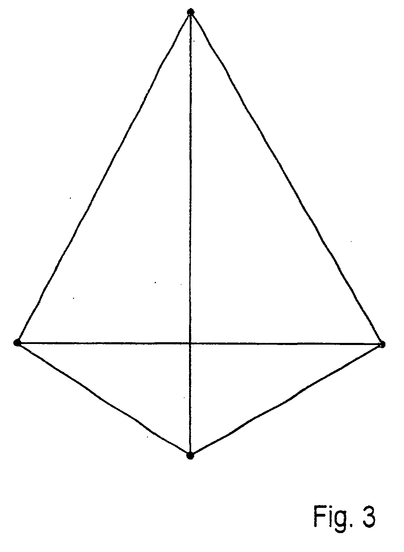

In Fig. 3 ist die Anordnung von vier verschiedenen digitalen Fingerabdrücken als Abbildung im endlichen projektiven Raum PG(d,q) dargestellt.

Ein solches System kann bei einem Verteilerschlüssel mit einer höheren Anzahl von Kunden Anwendung finden. Der Parameter d gibt dabei die maximale Zahl von Angreifern an, bei deren Zusammenschluß eine Manipulation noch nachgewiesen werden kann. Parameter q+1 ist die Anzahl der Kunden, die in den Verteilerschlüssel des Dokuments einbezogen sind.

Ein solches System kann demzufolge q+1 Kunden mit Kopien des Dokumentes so versorgen, daß die beiden folgenden Anforderungen erfüllt werden:

1. Jeder Kopie ist genau ein Kunde zugeordnet.
2. Schließen sich k Kunden mit k < d+1 als Angreifer zusammen und entfernen aus einem Dokument alle Fingerabdruck-Teile, die sie durch bitweisen Vergleich ermitteln können, so können diese k als Angreifer auftretenden Kunden aus den noch im manipulierten Dokument verbliebenen Fingerabdruck-Teilen eindeutig identifiziert werden.

In Fig. 3 wird das erfindungsgemäße Verfahren im dreidimensionalen Raum anhand eines Tetraeders näher erläutert.

Ein Fingerabdruck besteht dabei aus den Punkten, die auf einer Seite des Tetraeders liegen. Es haben demzufolge vier Kunden eine Kopie des Dokuments erhalten. Aufgrund der gewählten Geometrie schneiden sich immer jeweils zwei digitale Fingerabdrücke genau in einer Geraden und immer jeweils drei Fingerabdrücke in genau einem Punkt. Das bedeutet, daß man aus der Schnittmenge von je zwei bzw. je drei Fingerabdrücken genau auf die beiden bzw. die drei Kunden zurückschließen kann, die als Angreifer versucht haben, die Fingerabdrücke zu entfernen. In diesem System ist die maximale Anzahl der erkennbaren Angreifer also auf drei Angreifer beschränkt.

Es ist davon auszugehen, daß im allgemeinen Fall zumeist eine Lösung mit einer dualen rationalen Normkurve R im endlichen projektiven Raum PG(d;q) Anwendung findet. Die rationale Normkurve R ist dabei als eine Menge von q+1 Hyperebenen (d. h. projektiven Unterräumen der Dimension d-1) dimensioniert, von denen sich jeweils d in genau einem Punkt schneiden und dieser Schnittpunkt die d Hyperebenen eindeutig bestimmt.

Man erhält R, indem man zunächst eine rationale Normkurve $R'$ betrachtet. $R'$ ist dabei eine Menge von q+1 Punkten im endlichen projektiven Raum PG(d,q) von denen maximal d in einer gemeinsamen Hyperebene liegen. R' kann in homogenen Koordinaten als

$$R' = \{(1,t,t^2, ...,t^{d-1}) \mid t \in GF(q)\} \cup \{(0,0,0,...,0,1)\}$$

angegeben werden. Durch Vertauschen der Rollen von Punkten und Hyperebenen erhält man unter Anwendung des Dualitätsprinzips die duale rationale Normkurve R.

**Patentansprüche**

1. Verfahren zum Einbringen manipulationssicherer digitaler Fingerabdrücke in elektronische Dokumente, bei dem jedem Käufer eine Kopie eines Dokuments zugeordnet wird, in welcher als Markierung ein dem jeweiligen Käufer der Kopie zugeordneter individueller, vom Käufer nicht erkennbarer Fingerabdruck eingebracht ist, **dadurch gekennzeichnet, daß** die Zuweisung der Markierungsstellen des für jede Kopie unterschiedlichen individuellen digitalen Fingerabdrucks unter Zuhilfenahme endlicher geometrischen Strukturen erfolgt, wobei die Kopie jedes Käufers an den Stellen markiert wird, die durch die dem jeweiligen Kunden zugeordnete geometrische Unterstruktur und eine geheime Funktion festgelegt werden, daß die so für jeden Käufer als digitaler Fingerabdruck ermittelten Punkte innerhalb der geometrischen Struktur so festgelegt sind, daß sie sich mit den Punkten der Fingerabdrücke anderer Käufer überschneiden, und daß anhand eines bitweisen Vergleichs des ursprünglichen Dokuments mit einer Kopie, aus der durch Manipulation von höchstens d Käufern Teile von Fingerabdrücken entfernt wurden, aus den noch vorhandenen Schnittmengen der Fingerabdrücke die an der Manipulation beteiligten Kopien und damit die als Angreifer tätig gewordenen Käufer ermittelt werden können.

2. Verfahren nach Anspruch 1, **dadurch gekennzeichnet, daß** als endliche geometrische Struktur zur Platzzuweisung des digitalen Fingerabdrucks des Kunden auf der ihm zugeordneten Kopie eine duale rationale Normkurve $R$ im endlichen projektiven Raum mit Dimension d und Ordnung q gewählt wird, wobei die duale rationale Normkurve $R$ im endlichen projektiven Raum und eine geheime Abbildung bzw. Einwegfunktion f der Punkte des endlichen projektiven Raumes auf die Markierungsstellen des Dokuments bestimmt werden, dass jedem Kunden eindeutig eine Hyperebene H aus der dualen rationalen Normkurve $R$ zugeordnet wird, und daß in der Kopie des jeweiligen Kunden die den Punkten der Hyperebene H mittels der geheimen Abbildung f zugeordneten Markierungsstellen markiert werden, so dass im Falle einer Manipulation die Möglichkeit besteht, die aus der Manipulation resultierende Kopie bitweise mit dem Original des Dokuments zu vergleichen, wobei aus den in Kopie und Dokument verschiedenen Markierungsstellen mittels der Umkehrfunktion der geheimen Abbildung bzw. der Einwegfuntion f der entsprechende Unterraum im projektiven Raum rekonstruiert wird, und daß aus dem so konstruierten Unterraum eindeutig auf die zur Bildung dieses Unterraumes verwendeten Hyperebenen H der dualen rationalen Normkurve $R$ und damit auf die Identität der an der Manipulation beteiligten Angreifer geschlossen werden kann.

**Claims**

1. Method for introducing manipulation-proof digital fingerprints into electronic documents, wherein each purchaser is associated with a copy of a document, into which copy is introduced as a marking a personal fingerprint associated with the respective purchaser of the copy, said fingerprint not being detectable by the purchaser, **characterized in that** the marking locations of the personal digital fingerprint, which is different for each copy, are allocated using finite geometrical structures, each purchaser's copy being marked at the locations defined by the geometrical substructure associated with the respective customer and by a secret function; **in that** the points thus determined as a digital fingerprint for each purchaser are so defined within the geometrical structure that they overlap with the points of the fingerprints of other purchasers; and **in that**, on the basis of a bitwise comparison of the original document with a copy from which parts of fingerprints have been removed through manipulation by a maximum of d purchasers, it is possible to determine from the still existing intersections of the fingerprints those copies which were involved in the manipulation and therefore those purchasers who acted as attackers.

**2.** Method according to claim 1, **characterized in that** the finite geometrical structure used for allocating the position of the customer's digital fingerprint on the copy associated with the customer is a dual rational standard curve $R$ in the finite projective space of dimension d and order q, the marking locations of the document being determined by the dual rational standard curve $R$ in the finite projective space and by a secret image or one-way function f of the points of the finite projective space; **in that** each customer is unambiguously associated with a hyperplane H from the dual rational standard curve $R$, and **in that** the marking locations associated by means of the secret image f with the points of the hyperplane H are marked in each customer's copy, with the result that, in the event of a manipulation, it is possible for the copy resulting from the manipulation to be compared bitwise with the original of the document, wherein the corresponding subspace in the projective space is reconstructed by means of the inverse function of the secret image or one-way function f from the marking locations, said marking locations being different in copy and document; and **in that** the thus constructed subspace can be used to unambiguously deduce which hyperplanes H of the dual rational standard curve $R$ were used for forming said subspace and therefore to unambiguously deduce the identities of the attackers involved in the manipulation.

**Revendications**

**1.** Procédé d'insertion d'empreintes digitales non manipulables dans des documents électroniques, dans lequel une copie d'un document est attribuée à chaque acheteur, laquelle copie reçoit comme marquage une empreinte digitale individuelle attribuée à l'acheteur de la copie, non identifiable par l'acheteur, **caractérisé en ce que** l'attribution des zones de marquage de l'empreinte digitale numérique individuelle différente pour chaque copie se fait à l'aide de structures géométriques finies, la copie de chaque acheteur étant marquée sur les zones qui sont déterminées par la sous-structure géométrique attribuée au client en question et par une fonction secrète, **en ce que** les points déterminés pour chaque acheteur comme empreinte digitale numérique sont définis à l'intérieur de la structure géométrique de telle façon qu'ils se recouvrent avec les points des empreintes digitales d'autres acheteurs et **en ce que**, sur la base d'une comparaison binaire du document original avec une copie de laquelle ont été éliminées, par manipulation par d acheteurs au plus, des parties d'empreintes digitales, les copies ayant été manipulées peuvent être identifiées parmi les intersections encore existantes des empreintes digitales, ce qui permet d'identifier les acheteurs s'étant rendus coupables d'agression.

**2.** Procédé selon la revendication 1, **caractérisé en ce qu'**une courbe rationnelle standard double $R$ dans l'espace projectif fini de dimension d et d'ordre q est choisie comme structure géométrique finie pour l'attribution d'emplacement de l'empreinte digitale numérique du client sur la copie lui ayant été attribuée, la courbe rationnelle standard double $R$ dans l'espace projectif fini et une application secrète ou une fonction simple f des points de l'espace projectif fini étant définis sur les zones de marquage du document, **en ce que** chaque client se voit attribuer sans ambiguïté un hyperplan H de la courbe rationnelle standard double $R$, et **en ce que**, dans la copie du client concerné, les zones de marquage attribuées aux points de l'hyperplan H au moyen de l'application secrète f sont marquées, de sorte qu'en cas de manipulation, il soit possible de comparer bit par bit la copie résultant de la manipulation avec l'original du document, le sous-espace correspondant de l'espace projectif étant reconstruit à partir des zones de marquage, qui diffèrent dans la copie et dans le document, à l'aide de la fonction réciproque de l'application secrète ou de la fonction simple f, de sorte que l'on peut déduire sans ambiguïté, à partir du sous-espace ainsi construit, l'hyperplan H de la courbe rationnelle standard double $R$ utilisé pour la formation de ce sous-espace et ainsi, l'identité des auteurs de la manipulation.

Fig. 1

● Punkte

╱ Geraden

╲ Fingerabdruck I

╲ Fingerabdruck II

╲ Fingerabdruck III

Fig. 2

Fig. 3